# EUROPÄISCHE PATENTSCHRIFT

(11) **EP 1 898 506 B1**
(45) Veröffentlichungstag und Bekanntmachung des Hinweises auf die Patenterteilung: **19.10.2011**
(21) Anmeldenummer: 07013945.6
(22) Anmeldetag: 17.07.2007
(51) Int. Cl.: H02G 3/06, H02G 3/22, H02G 15/013

(54) **Kabel- oder Schlauchverschraubung**
Cable or tube connection
Raccord à vis pour câbles et tuyaux

(30) Priorität: 11.09.2006 DE 102006043217
(43) Veröffentlichungstag der Anmeldung: 12.03.2008
(73) Patentinhaber: Bimed Teknik A.S., 34900 Büyükcekmece / Istanbul (TR)
(72) Erfinder: Albukrek, Yilmaz, Yesilköy Istanbul (TR); Kempf, Klaus Dr., 70563 Stuttgart (DE)
(74) Vertreter: Wörz, Volker Alfred

(56) Entgegenhaltungen:
- DE-A1- 19 921 311
- DE-C1- 19 738 517

## Beschreibung

Die vorliegende Erfindung betrifft eine Kabel- oder Schlauchverschraubung gemäß dem Oberbegriff des Anspruchs 1.

Eine gattungsgemäße Kabelverschraubung ist aus der DE 199 21 311 A1 bekannt. Dabei ist das Gleitelement integraler Bestandteil des Klemmelements. Das erschwert jedoch eine Drehung des Klemmelements um einen Längsachse der Verschraubung. Bei durch die Verschraubung hindurch geführtem Kabel ist deshalb auch eine Drehung des Kabels um die Längsachse kaum möglich.

Aus der DE 197 38 517 C1 ist eine weitere Art einer Kabelverschraubung für Erdungs- oder Abschirmkabel bekannt. In dieser Druckschrift geht es insbesondere um eine sichere und zuverlässige Kontaktierung der Abschirmung.

Aus der DE 43 25 420 C2 ist eine Kabeldurchgangsvorrichtung zur Durchführung eines ummantelten Kabels durch eine Wandperforation bekannt. Diese Kabeldurchgangsvorrichtung weist einen Stutzen, ein Druckelement und ein Klemmelement auf. Bei der Montage der Kabeldurchführungsvorrichtung wird ein Kabel durch den Stutzen durchgeführt und das Druckelement durch Drehen angezogen. Dabei bewegt sich der Stutzen relativ zum Druckelement in axialer Richtung und drückt gegen das Klemmelement, sodass das Kabel in der Kabeldurchgangsvorrichtung eingeklemmt wird.

Des Weiteren ist eine derartige Kabelverschraubung bspw. aus der DE 196 15 602 A1 bekannt. Das Druckelement ist als eine Mutter mit einem Innengewinde ausgebildet und wird auf ein Außengewinde des Stutzens aufgeschraubt. Die Mutter weist an ihrer Innenseite eine schräge, konusförmige Fläche auf. Durch Aufschrauben der Mutter auf den Stutzen werden über die Schrägfläche das im Inneren der Verschraubung angeordnete hohlzylinderförmige Klemmelement und das im wesentlichen ringförmige Dichtungselement in Richtung der Längsachse der Verschraubung druckbeaufschlagt. Dabei werden das Klemmelement und das Dichtungselement radial nach innen gedrückt bis sie zur Anlage an dem durch die Verschraubung geführten Kabel gelangen.

Problematisch bei der bekannten Verschraubung ist die Tatsache, dass selbst bei vollständig auf den Stutzen aufgeschraubtem Druckelement noch ein Teil des Außengewindes des Stutzens nach außen hin sichtbar ist. Dort können sich Schmutz und andere Ablagerungen absetzen. Das ist insbesondere in der Chemie-, Arzneimittel- und Lebensmittelindustrie von Nachteil, weil dann die hohen Anforderungen an die Reinheit nicht mehr eingehalten werden können, ganz abgesehen von den gesundheitlichen Beeinträchtigungen, die von den Ablagerungen ausgehen können.

Andererseits kann bei den bekannten Verschraubungen nicht einfach das Gewinde mit so wenigen Gewindegängen ausgebildet werden, dass das Druckelement in aufgeschraubtem Zustand das Gewinde auf jeden Fall vollständig überdeckt, da je nach Durchmesser des durch die Verschraubung verlaufenden Kabels oder Schlauchs das Druckelement mehr oder weniger weit auf den Stutzen aufgeschraubt werden muss, damit das Klemmelement und das Dichtelement auch wirklich fest und dicht an der Außenseite des Kabels bzw. des Schlauchs anliegen. Um also die Verschraubung für Kabel und Schläuche mit unterschiedlichem Durchmesser einsetzen zu können, ist es unerlässlich, dass das Druckelement mehr oder weniger weit auf den Stutzen aufgeschraubt werden kann.

Außerdem ist aus der DE 20 2004 019 698 U1 eine verschraubung für abgedichtete Leitungsdurchführungen bekannt, die ein Druckelement mit einer halbkugelähnlicher Innenfläche aufweist.

Ausgehend von dem beschriebenen Stand der Technik liegt der vorliegenden Erfindung die Aufgabe zugrunde, eine Kabel- oder Schlauchverschraubung der eingangs genannten Art dahingehend auszugestalten und weiterzubilden, dass in der Verschraubung einerseits Kabel bzw. Schläuche mit unterschiedlichen Außendurchmessern fest gehalten und abgedichtet werden können, wobei das Klemmelement möglichst gleichmäßig eine Radialkraft auf das Kabel bzw. den Schlauch ausübt und andererseits aber das Absetzen von Schmutz und anderer Ablagerungen auf der Außenseite des Stutzens, insbesondere im Bereich des Außengewindes des Stutzens, weitgehend verhindert werden.

Zur Lösung dieser Aufgabe wird ausgehend von der Kabel- und Schlauchverschraubung der eingangs genannten Art vorgeschlagen, dass das Gleitelement separat von dem Klemmelement ausgebildet ist und dass eine in Richtung des Klemmelements gerichtete Fläche des Gleitelements als eine schräge, konusförmige Gleitfläche ausgebildet ist.

Es ist erkannt worden, dass die Verschiebbarkeit des Druckelements relativ zum Stutzen in Richtung der Längsachse des Stutzens durch Verschrauben des Druckelements mit dem Stutzen das Hauptproblem für die Ablagerungen an der Außenseite des Stutzens ist. Aus diesem Grund wurde das Druckelement nur noch relativ zum Stutzen um die Längsachse drehbar, nicht jedoch in Richtung der Längsachse verschiebbar an dem Stutzen befestigt. Dies kann bspw. dadurch erfolgen, dass das Druckelement von außen über den Stutzen gestülpt wird und mittels einer Clip- oder Rast-Verbindung mit dem Stutzen in Eingriff tritt. Der Stutzen kann somit ohne Außengewinde ausgebildet werden, so dass die Hauptursache für die Ablagerungen an der Außenseite des Stutzens beseitigt werden kann. Die Clip- oder Rast-Verbindung zwischen Stutzen und Druckelement wird vorzugsweise von dem montierten Druckelement überdeckt. Somit kann die Außenfläche des Stutzens und des Druckelements möglichst glatt ausgebildet werden, um Ablagerungen möglichst wenig Möglichkeit zum Verschmutzen der Außenflächen von Stutzen und Druckelement zu bieten.

Durch Verdrehen des Druckelements relativ zum Stutzen wird somit das Druckelement nicht mehr relativ zum Stutzen und damit relativ zur Gehäusewand, in welcher die Verschraubung angeordnet ist, verschoben. Vielmehr wird die Drehbewegung des Druckelements relativ zum Stutzen in das Innere der Verschraubung übertragen und dort in eine Längsbewegung des Klemmelements und des Dichtungselements relativ zum Stutzen umgewandelt. Aufgrund einer geeigneten Ausgestaltung des Inneren der Verschraubung wird die Längsbewegung des Klemmelements und des Dichtungselements relativ zum Stutzen in eine Bewegung der beiden Elemente radial nach innen umgesetzt. Insofern wirkt das Druckelement durch Verdrehen relativ zum Stutzen nach wie vor auf das Klemmelement und das Dichtungselement im Sinne eines Anliegens des Klemmelements und des Dichtungselements an ein durch die Verschraubung hindurchgeführtes Kabel oder an einen durch die Verschraubung hindurchgeführten Schlauch ein. Erfindungsgemäß wird also die gesamte Mechanik zum Anlegen des Klemmelements und des Dichtungselements an der Außenseite des Kabels bzw. des Schlauchs in das Innere der Verschraubung verlagert, um die Außenflächen der Verschraubung möglichst groß- und glattflächig ohne Ecken und Kanten ausgestalten zu können.

An der Innenseite des Druckelements ein Innengewinde ausgebildet ist, mit dem ein Außengewinde eines hohlzylinderförmigen Gleitelements in Eingriff steht, wobei das Gleitelement um die Längsachse des Stutzens drehfest, aber in Richtung der Längsachse relativ zum Stutzen verschiebbar angeordnet ist. Eine Drehbewegung des Druckelements relativ zum Stutzen wird also in eine axiale Längsbewegung des Gleitelements relativ zum Stutzen umgesetzt. Das Gleitelement kann bspw. mittels länglicher Nuten, die im wesentlichen parallel zu der Längsachse des Stutzens verlaufen und die in dem Gleitelement oder in dem Stutzen ausgebildet sind, und entsprechender Vorsprünge in dem Stutzen bzw. in dem Gleitelement drehfest aber axial längsverschiebbar an dem Stutzen befestigt werden.

Die in Richtung des Klemmelements gerichtete Anschlagfläche des Gleitelements ist als eine schräge, konusförmige Gleitfläche ausgebildet, wobei ein Verschieben des Gleitelements in Richtung der Längsachse relativ zum Stutzen und in Richtung des Klemmelements und/oder des Dichtungselements das Klemmelement und/oder das Dichtungselement zumindest teilweise nach innen drückt. Alternativ oder zusätzlich wird vorgeschlagen, dass eine in Richtung des Klemmelements und/oder des Dichtungselements gerichtete Fläche des Gleitelements als eine schräge, konusförmige Gleitfläche ausgebildet ist, wobei ein Verschieben des Gleitelements in Richtung der Längsachse relativ zum Stutzen und in Richtung des Klemmelements und/oder des Dichtungselements das Klemmelement und/oder das Dichtungselement zumindest teilweise nach innen drückt.

Gemäß einer vorteilhaften Ausführungsform der Erfindung wird vorgeschlagen, dass das Klemmelement und/oder das Dichtungselement zwischen dem Gleitelement und einer Anschlagfläche des Druckelements angeordnet ist. Durch das Verschieben des Gleitelements in axialer Richtung relativ zum Stutzen werden somit das Klemmelement und/oder das Dichtungselement zwischen Gleitelement und Anschlagfläche des Druckelements eingeklemmt und - bei entsprechender Ausgestaltung der Berührungsflächen zwischen Gleitelement und Klemmelement bzw. Dichtungselement einerseits und Anschlagfläche und Dichtungselement bzw. Klemmelement andererseits - radial nach innen verschoben und zur Auflage an der Außenseite des Kabels bzw. des Schlauchs gebracht.

Gemäß einer anderen vorteilhafte Weiterbildung der Erfindung wird vorgeschlagen, dass das Druckelement als eine Hutmutter mit glatter Außenfläche ohne Rillen und Vertiefungen ausgebildet ist. Zur Betätigung der Mutter sind auf der Außenfläche der Mutter einander gegenüberliegend lediglich zwei Seiten abgeflacht, so dass die Mutter mit einem Schraubschlüssel (z.B. einem Außensechskantschlüssel) oder einer geeigneten Zange (z.B. einer Wasserrohrzange) mit einem Drehmoment beaufschlagbar ist.

Gemäß einer weiteren bevorzugten Ausführungsform der Erfindung wird vorgeschlagen, dass das Druckelement als eine Hutmutter ausgebildet ist, deren Außenfläche den gesamten Stutzen bis zur Gehäusewand überdeckt. Diese Ausführungsform hat den Vorteil, dass die gesamte Außenfläche der Verschraubung nur durch die Außenfläche der Hutmutter gebildet wird. Die Außenfläche des Stutzens kann somit beliebig ausgestaltet werden ohne dass dies einen negativen Einfluss auf Ablagerungen auf der Außenfläche der Verschraubung hätte. Diese Ausführungsform kann erst mit der erfindungsgemäßen Verschraubung realisiert werden, da unabhängig von dem Außendurchmesser des Kabels bzw. des Schlauchs in der Verschraubung die Hutmutter stets mit dem gleichen Abstand möglichst dicht an die Gehäusewand herangeführt und dort an dem Stutzen befestigt werden kann.

Vorteilhafterweise ist zwischen einer zur Gehäusewand gerichteten Stirnseite der Hutmutter und der Gehäusewand ein Dichtungsring angeordnet. Durch den Dichtungsring wird das Eindringen von Schmutz oder anderer Ablagerungen in das Innere der Verschraubung vermieden, so dass die hohen Anforderungen an die Hygiene insbesondere im Bereich der Lebensmittel-, Arzneimittel- und Chemietechnik problemlos eingehalten werden können und eine hohe Schutzart für Schmutz und Feuchtigkeit erreicht wird.

Vorzugsweise weist der Dichtungsring in einer durch die Längsachse der Verschraubung verlaufenden Ebene einen rechteckförmigen Querschnitt auf und die Außenfläche der Hutmutter geht bündig in die Außenfläche des Druckelements über. Durch den bündigen Übergang werden Ablagerungen zwischen der Außenfläche der Hutmutter, dem Dichtungselement und der Gehäusewand auf ein Minimum reduziert.

Um die schmutz- und ablagerungsabweisenden Eigenschaften der erfindungsgemäßen Verschraubung weiter zu verbessern, wird vorgeschlagen, dass die Außenfläche der Mutter und/oder die Außenfläche des Dichtungsrings mit einer Nanobeschichtung versehen ist. Eine Nanobeschichtung bezeichnet das Aufbringen von Nanostrukturen auf Oberflächen. Diese Oberflächen werden dadurch superhydrophob und damit wasserabweisend. Dies erlaubt eine leichte Reinigung. Es gibt auch Spray-Beschichtungen, die solche Nano-Strukturen ausbilden. Werden diese Beschichtungen auf bereits entsprechend mikrostrukturierte Oberflächen aufgebracht, kann ein Lotuseffekt erzielt werden. Derartig behandelte Flächen weisen auch Fette, Öle und Säuren ab und sind chemisch beständig (z.B. gegenüber Lösungsmitteln). Somit ist eine derart ausgestaltete Verschraubung besonders gut für den Einsatz in der Lebensmittel-, Chemie- und Arzneimittelindustrie geeignet.

Eine bevorzugte Ausführungsform der Erfindung wird nachfolgend anhand der Figuren näher erläutert. Es zeigen:
- Fig. 1: eine erfindungsgemäße Kabel- oder Schlauchverschraubung gemäß einer ersten bevorzugten Ausführungsform in einer Schnittansicht;
- Fig. 2: die erfindungsgemäße Verschraubung aus Figur 1 in einer Ansicht von oben; und
- Fig. 3: die erfindungsgemäße verschraubung aus Figur 1 in einer perspektivischen Ansicht.

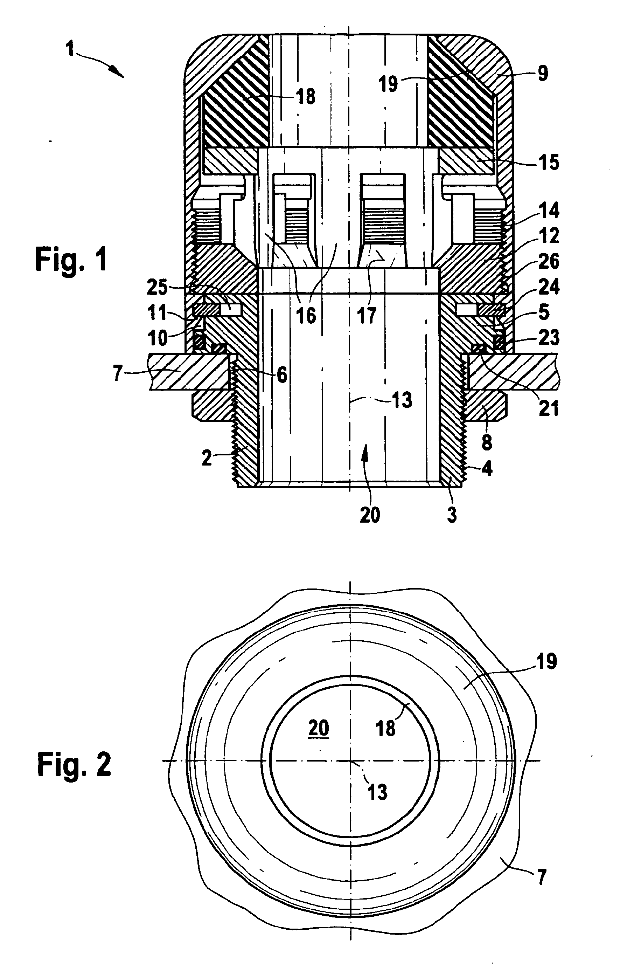

In Figur 1 ist eine erfindungsgemäße Kabel- oder Schlauchverschraubung in ihrer Gesamtheit mit dem Bezugszeichen 1 bezeichnet. Die Verschraubung 1 umfasst einen hohlzylinderförmigen Stutzen 2 aus Kunststoff, vorzugsweise aus Polyamid. Selbstverständlich kann der Stutzen 2 auch aus einem anderen Material, bspw. aus Metall, vorzugsweise aus Messing, Edelstahl oder Aluminium bestehen. Der Stutzen 2 umfasst an seinem unteren Ende 3 ein Außengewinde 4, das auf der dem unteren Ende 3 abgewandten Seite in einen Kragen 5 übergeht. Zur Montage wird der Stutzen 2 mit dem unteren Ende 3 in eine Öffnung 6 einer Wand 7 eines Gehäuses so weit eingeführt, bis der Kragen 5 an der Gehäusewand 7 zur Auflage kommt. Auf der dem Kragen 5 gegenüberliegenden Seite der Gehäusewand 7 wird eine Gegenmutter 8 auf das Außengewinde 4 aufgeschraubt und die Verschraubung 1 so in der Gehäusewand 7 befestigt. Die Gegenmutter 8 besteht aus Kunststoff, vorzugsweise aus Polyamid. Selbstverständlich kann die Gegenmutter 8 auch aus einem anderen Material, bspw. Metall, vorzugsweise aus Messing, Edelstahl oder Aluminium bestehen.

Auf das obere Ende des Stutzens 2 ist im Bereich des Kragens 5 ein Druckelement 9 derart befestigbar, dass es relativ zum Stutzen 2 zwar um die Längsachse 13 des Stutzens 2 drehbar, aber in Richtung der Längsachse 13 nicht verschiebbar ist. Diese Verbindung zwischen Druckelement 9 und Stutzen 2 wird in dem dargestellten Ausführungsbeispiel durch eine Clips- oder Rast-Verbindung hergestellt. Dabei ist in der Außenseite des Stutzens 2 eine ringförmige Aussparung 10 vorgesehen, in welche radial nach außen elastisch verformbare Rastnasen 11 eingreifen. Ansonsten weist die Außenseite des Stutzens 2 keinerlei Vertiefungen, Nuten, oder Ritzen auf, in denen sich Schmutz, Feuchtigkeit, Staub, etc. absetzen könnte, insbesondere ist der Stutzen 2 frei von Außengewinden. Das Druckelement 9 besteht aus Kunststoff, vorzugsweise aus Polyamid. Selbstverständlich kann das Druckelement 9 aber auch aus einem anderen Material, bspw. Metall, vorzugsweise aus Messing, Edelstahl oder Aluminium bestehen.

Oberhalb des oberen Endes des Stutzens 2, d.h. oberhalb des Kragens 5 ist ein ringförmiges Gleitelement 12 derart angeordnet, dass es relativ zum Stutzen 2 zwar in Richtung der Längsachse 13 verschiebbar, aber um die Längsachse 13 des Stutzens 2 nicht drehbar ist. An der Außenseite des Gleitelements 12 ist ein Außengewinde 26 ausgebildet, das mit einem auf der Innenseite des Druckelements 9 ausgebildeten Innengewinde 14 in Eingriff tritt. Durch Verdrehen des Druckelements 9 um die Längsachse 13 relativ zu dem Stutzen 2 wird das Gleitelement 12 im Inneren der Verschraubung 1 nach oben oder nach unten bewegt. Vorzugsweise wird das Gleitelement 12 bei einem Verdrehen des Druckelements 9 von oben betrachtet im Uhrzeigersinn nach oben bewegt.

Oberhalb des Gleitelements 12 ist ein hohlzylinderförmiges Klemmelement angeordnet, umfassend einen Haltering 15 und mehrere daran befestigte, umfangsseitig angeordnete und nach unten ragende, radial nach innen elastisch verformbare Klemmfinger 16. Das untere Ende der Klemmfinger 16 weist eine schräge Fläche auf, welche einer an der Oberseite des Gleitelementes 12 ausgebildeten ringförmigen, schrägen, konusförmigen Gleitfläche 17 entspricht. Das Klemmelement 15, 16 kann um die Längsachse 13 drehbar, oder aber drehfest relativ zum Stutzen 2 angeordnet sein. Auf jeden Fall ist das Klemmelement 15, 16 in Richtung der Längsachse 13 relativ zum Stutzen 2 und damit auch relativ zu dem daran befestigten Druckelement 9 verschiebbar angeordnet.

Oberhalb des Klemmelements 15, 16 ist ein ringförmiges bzw. hohlzylinderförmiges Dichtungselement 18 angeordnet, das vorzugsweise aus Gummi oder einem elastisch nachgiebigen Kunststoff besteht. Die Unterseite des Dichtungselements 18 ist ebenso wie die Oberseite des Halterings 15 vorzugsweise als eine sich in im wesentlichen horizontaler Richtung erstreckende Auflagefläche ausgebildet. Die Oberseite des Dichtungselements 18 weist allerdings eine schräge, konusförmige Fläche auf, die einer entsprechend ausgebildeten schrägen, konusförmigen Fläche 19 an der Innenseite des Druckelements 9 entspricht. Selbstverständlich kann die Fläche 19 auch beliebig anderes ausgestaltet sein, bspw. halbkugelähnlich wie in der DE 20 2004 019 698 U1 offenbart.

Nachfolgend wird die Funktion der erfindungsgemäßen Verschraubung 1 nachdem diese in der Gehäusewand 7 befestigt wurde kurz erläutert. Das Kabel oder der Schlauch (nicht dargestellt) wird durch die Verschraubung 1 bzw. durch eine im Inneren der Verschraubung 1 ausgebildete Öffnung 20 entlang der Längsachse 13 in das Gehäuse geführt. Dabei ist das Kabel bzw. der Schlauch vorzugsweise sowohl um die Längsachse 13 frei drehbar als auch in Richtung der Längsachse 13 frei verschiebbar. Anschließend wird das Druckelement 9 verdreht, so dass das Gleitelement 12 nach oben verschoben wird. Dabei drückt die schräge Gleitfläche 17 die Klemmfinger 16 radial nach innen bis diese auf dem Außenumfang des Kabels bzw. des Schlauchs aufliegen und Kabel bzw. Schlauch in der eingeführten Position sowohl in Drehrichtung um die Längsachse 13 als auch in Richtung der Längsachse 13 festhalten und fixieren. Das Klemmelement 15, 16 bewirkt eine Zugentlastung des hindurchgeführten und fixierten Kabels bzw. Schlauchs. Gegen Ende des Klemmvorgangs oder im Anschluss an den Klemmvorgang wird das Klemmelement 15, 16 weiter nach oben bewegt und drückt das Dichtelement 18 nach oben. Dieses wird dann durch die schräge Anschlagsfläche 19 an der Innenseite des Druckelements 9 ebenfalls radial nach Innen verformt, bis das Dichtelement 18 vollflächig an dem Außenumfang des Kabels bzw. des Schlauchs anliegt. Dadurch ist die Kabel- bzw. Schlauchdurchführung in das Gehäuse auch gegen das Eindringen von Feuchtigkeit und/oder Schmutz abgedichtet.

Die erfindungsgemäße Verschraubung 1 ist besonders gut für den Einsatz überall dort geeignet, wo Rückstände an der Außenfläche der Verschraubung 1 vermieden werden sollen, wie bspw. in der Lebensmittel-, Chemie- und Arzneimittelindustrie. Rückstände an der Außenfläche der Verschraubung 1 werden durch eine Vielzahl von Maßnahmen vermieden. Zunächst einmal ist das Druckelement 9 als eine Hutmutter mit glatter Außenfläche ohne Rillen, Ritzen oder andere Vertiefungen ausgebildet. Dadurch können Ablagerungen von Rückständen praktisch vollständig vermieden werden. Zudem wird die Hutmutter 9 derart dimensioniert, dass deren Außenfläche den gesamten Stutzen 2 bis zur Gehäusewand 7 überdeckt. Das bedeutet also, dass die gesamte Außenfläche der Verschraubung 1 durch die Außenfläche der Hutmutter 9 gebildet wird. Die Hutmutter 9 verändert beim Verdrehen relativ zum Stutzen 2 ihren Abstand zu der Gehäusewand 7 nicht. Die Außenwand der Hutmutter 9 kann also bis an die Gehäusewand 7 heran geführt werden, so dass auch im Übergangsbereich zwischen Außenwand der Hutmutter 9 und der Gehäusewand 7 Ablagerungen etc. vermieden werden können.

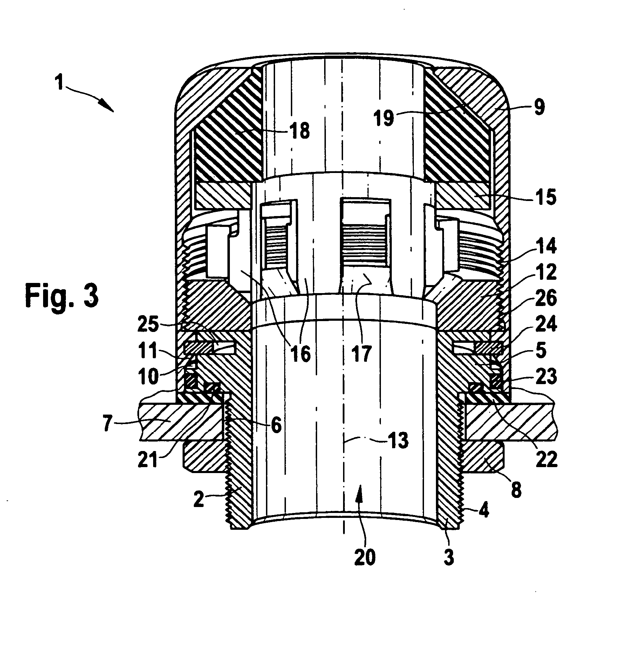

Zusätzlich kann zwischen einer zur Gehäusewand 7 gerichteten Stirnseite der Außenwand der Hutmutter 9 und der Gehäusewand 7 ein Dichtungsring 21 angeordnet sein. Dieser kann wie der in den Figuren gezeigte Dichtungsring 21 einen kreisförmigen Querschnitt aufweisen. In Figur 3 ist zusätzlich zu dem Dichtungsring 21 ein weiterer Dichtungsring 22 mit einem rechteckförmigen Querschnitt angeordnet. Selbstverständlich kann der weitere Dichtungsring 22 auch alternativ zu dem Dichtungsring 21 vorgesehen werden. Zusätzlich kann noch ein weiterer Dichtungsring 23 vorgesehen werden, der zwischen der Innenseite des Druckelements 9 und der Außenseite des Stutzens 2 wirkt.

Schließlich ist in den Figuren 1 und 3 ein Kunststoffring 24 mit einem rechteckförmigen Querschnitt gezeigt, der in einer an der Außenseite des Stutzens 2 ausgebildeten Ringnut 25 angeordnet ist und mit seinem Durchmesser die Außenfläche des Stutzens 2 überragt. Der Ring 24 bildet einen Teil der Clips- oder Rast-Verbindung zwischen dem Druckelement 9 und dem Stutzen 2. Beim Aufsetzen des Druckelements 9 auf den Stutzen 2 wird der Ring 24 elastisch radial nach innen in die Ringnut 25 gedrückt. An der Innenseite des Druckelements 9 ist oberhalb der Rastnasen 11 ebenfalls eine Ringnut ausgebildet, in welche sich der Ring 24 hinein ausdehnt, sobald das Druckelement 9 vollständig auf den Stutzen 2 aufgesteckt ist. Dabei hintergreifen die Rastnasen 11 die Unterseite des Rings 24 und halten so das Druckelement 9 unlösbar, aber um die Längsachse 13 der Verschraubung 1 drehbar, auf dem Stutzen 2 fest. Durch den Einsatz des Rings 24 kann insbesondere die Drehbewegung des Druckelements 9 um die Längsachse 13 relativ zu dem Stutzen 2 vereinfacht werden.

Durch eine Nanobeschichtung der Außenfläche des Druckelements 9 und wahlweise auch der nach außen gerichteten Fläche des Dichtungsrings 22 kann die gesamte nach außen gerichtete Außenfläche der Verschraubung 1 besonders gut gegen Ablagerungen und Rückstände geschützt werden.

Ein wichtiger Aspekt der vorliegenden Erfindung ist darin zu sehen, dass das Druckelement 9 in einem in Längsrichtung festen Abstand zu dem Stutzen 2 und damit auch zur Gehäusewand 7 angeordnet ist. Der Abstand kann abgedichtet werden, so dass das Eindringen oder Ablagern von Rückständen wirksam vermieden wird. Der gesamte Mechanismus zum Festziehen des Klemmelements 15, 16 und des Dichtungselements 18 im Inneren der Verschraubung ist komplett nach Innen verlagert worden, so dass die Außenfläche der Verschraubung großflächig glatt ausgebildet werden kann.

Selbstverständlich ist es denkbar, die Funktion der Zugentlastung durch das Klemmelement 15, 16 und die Dichtfunktion durch das Dichtungselement 18 in ein einziges Element zu integrieren, insbesondere dann wenn nicht allzu hohe Zugentlastungen erforderlich sind. Zudem wäre es denkbar, die erfindungsgemäße Verschraubung 1 als eine sog. EMV-Verschraubung auszubilden, bei der über die Verschraubung ein elektrischer Kontakt zwischen einem Kabelschirm und der Gehäusewand 7 hergestellt wird. Dazu müssen das Klemmelement 15, 16 und der Stutzen 2 aus einem elektrisch leitfähigen Material bestehen. Alternativ kann zusätzlich zu dem Klemmelement 15, 16 auch ein separates Schirmkontaktelement im Inneren der Verschraubung 1 vorgesehen werden, wie diese bspw. aus der DE 196 15 602 A1 bekannt ist. Zudem muss eine zuverlässige elektrische Kontaktierung zwischen dem Klemmelement 15, 16 bzw. dem Schirmkontaktelement und dem Stutzen 2 sichergestellt sein. Die Kontaktierung zwischen dem Stutzen 2 und der Gehäusewand 7 kann bspw. mittels einer Gegenmutter 8 aus einem elektrisch leitfähigen Material sichergestellt werden.

## Patentansprüche

1. Kabel- oder Schlauchverschraubung (1) umfassend
- einen mit einem Gehäuse verbindbaren, im wesentlichen hohlzylinderförmigen Stutzen (2),
- ein mit dem Stutzen (2) um eine Längsachse (13) des Stutzens (2) drehbar verbundenes Druckelement (9), an dessen Innenseite ein Innengewinde (14) ausgebildet ist,
- ein im wesentlichen hohlzylinderförmiges Klemmelement (15, 16),
- ein im wesentlichen ringförmiges Dichtungselement (18) und
- ein Gleitelement (13) mit einem Außengewinde (13), das mit dem Innengewinde (14) des Druckelements (9) in Eingriff steht,
wobei das Druckelement (9) durch Verdrehen relativ zum Stutzen (2) auf das Klemmelement (15, 16) und das Dichtungselement (18) im Sinne eines Anliegens des Klemmelements (15, 16) und des Dichtungselements (18) an ein durch die Verschraubung (1) hindurchgeführtes Kabel oder an einen durch die Verschraubung (1) hindurchgeführten Schlauch einwirkt,
wobei das Druckelement (9) in Richtung der Längsachse (13) des Stutzens (2) in einem festen, auch durch Verdrehen relativ zum Stutzen (2) nicht veränderbaren Bezug zum Stutzen (2) mit diesem verbunden ist,
wobei das Gleitelement (12) um die Längsachse (13) drehfest, aber in Richtung der Längsachse (13) relativ zum Stutzen (2) verschiebbar angeordnet ist und ein verschieben des Gleitelements (12) entlang der Längsachse (13) in Richtung des Klemmelements (15, 16) eine Bewegung des Klemmelements (15, 16) radial nach innen bewirkt, **dadurch gekennzeichnet, dass** das Gleitelement (12) separat von dem Klemmelement (15, 16) ausgebildet ist und dass eine in Richtung des Klemmelements (15, 16) gerichtete Fläche (17) des Gleitelements (12) als eine schräge, konusförmige Gleitfläche ausgebildet ist.

2. Verschraubung (1) nach Anspruch 1, **dadurch gekennzeichnet, dass** das Klemmelement (15, 16) und das Dichtungselement (18) zwischen dem Gleitelement (12) und einer Anschlagfläche (19) des Druckelements (9) angeordnet ist.

3. Verschraubung (1) nach Anspruch 2, **dadurch gekennzeichnet, dass** die Anschlagfläche (19) als eine schräge Gleitfläche ausgebildet ist, wobei ein Verschieben des Gleitelements (12) relativ zum Stutzen (2) entlang der Längsachse (13) in Richtung des Klemmelements (15, 16) und des Dichtungselements (18) das Klemmelement (15, 16) und das Dichtungselement (18) zumindest teilweise nach innen drückt.

4. Verschraubung (1) nach einem der Ansprüche 1 bis 3, **dadurch gekennzeichnet, dass** das Druckelement (9) als eine Hutmutter mit glatter Außenfläche ohne Rillen und Vertiefungen ausgebildet ist.

5. Verschraubung (1) nach einem der Ansprüche 1 bis 4, **dadurch gekennzeichnet, dass** das Druckelement (9) als eine Hutmutter ausgebildet ist, deren Außenfläche den gesamten Stutzen (2) bis zur Gehäusewand (7) überdeckt.

6. Verschraubung (1) nach Anspruch 5, **dadurch gekennzeichnet, dass** zwischen einer zur Gehäusewand (7) gerichteten Stirnseite der Hutmutter (9) und der Gehäusewand (7) ein Dichtungsring (21; 22) angeordnet ist.

7. Verschraubung (1) nach Anspruch 6, **dadurch gekennzeichnet, dass** der Dichtungsring (22) einen rechteckförmigen Querschnitt aufweist und die Außenfläche des Dichtungsrings (22) bündig in die Außenfläche des Druckelements (9) übergeht.

8. Verschraubung (1) nach einem der Ansprüche 4 bis 7, **dadurch gekennzeichnet, dass** die Außenfläche der Hutmutter (9) und/oder die Außenfläche des Dichtungsrings (22) mit einer Nanobeschichtung versehen ist.

## Claims

1. A cable or tube connection (1), including
- an essentially hollow-cylindrical fitting (2) that is connectable to a housing,
- a pressure element (9) rotatably connected to the fitting (2) about a longitudinal axis (13) of the fitting (2), on the inside of which pressure element a female thread (14) is embodied,
- an essentially hollow-cylindrical clamping element (15, 16),
- annular sealing element (18), and
- a slide element (13) having a male thread (13) that is in engagement with the female thread (14) of the pressure element (9),
in which the pressure element (9), by rotation relative to the fitting (2), acts on the clamping element (15, 16), and the sealing element (18) such that the clamping element (15, 16) and the sealing element (18) contact a cable passed through the connection (1) or a hose passed through the connection (1),
and the pressure element (9), in the direction of the longitudinal axis (13) of the fitting (2), is connected to the fitting (2) in a fixed relationship to it that is not variable even as a result of twisting relative to the fitting (2),
and the slide element (12) is disposed in a manner fixed against relative rotation about the longitudinal axis (13) but displaceably in the direction of the longitudinal axis (13) relative to the fitting (2), and a displacement of the slide element (12) along the longitudinal axis (13) in the direction of the clamping element (15, 16) causes a motion of the clamping element (15, 16) radially inward,
**characterized in that** the slide element (12) is embodied separately from the clamping element (15, 16); and that a face (17) of the slide element (12) oriented in the direction of the clamping element (15, 16) is embodied as an oblique, conical slide face.

2. The connection (1) as defined by claim 1, **characterized in that** the clamping element (15, 16) and the sealing element (18) are disposed between the slide element (12) and a stop face (19) of the pressure element (9).

3. The connection (1) as defined by claim 2, **characterized in that** the stop face (19) is embodied as an oblique slide face, and a displacement of the slide element (12) relative to the fitting (2) along the longitudinal axis (13) in the direction of the clamping element (15, 16) and of the sealing element (18) presses the clamping element (15, 16) and the sealing element (18) at least partially inward.

4. The connection (1) as defined by one of claims 1 through 3, **characterized in that** the pressure element (9) is embodied as a cap nut with a smooth outer surface, without grooves and indentations.

5. The connection (1) as defined by one of claims 1 through 4, **characterized in that** the pressure element (9) is embodied as a cap nut, whose outer face covers the entire fitting (2) as far as the housing wall (7).

6. The connection (1) as defined by claim 5, **characterized in that** a sealing ring (21; 22) is disposed between a face end, oriented toward the housing wall (7), of the cap nut (9) and the housing wall (7).

7. The connection (1) as defined by claim 6, **characterized in that** the sealing ring (22) has a rectangular cross section, and the outer face of the sealing ring (22) merges flush with the outer face of the pressure element (9).

8. The connection (1) as defined by one of claims 4 through 7, **characterized in that** the outer face of the cap nut (9) and/or the outer face of the sealing ring (22) is provided with a nanocoating.

## Revendications

1. Raccord vissé pour câble ou tuyau (1) comprenant :
- un manchon (2) de forme essentiellement cylindrique creuse, destiné à être relié à un boîtier,
- un élément de poussée (9) relié au manchon (2) et tournant autour de l'axe longitudinal (13) du manchon (2), le côté intérieur de l'élément de poussée ayant un filetage intérieur (14),
- un élément de serrage (15, 16) essentiellement de forme cylindrique creuse,
- un élément d'étanchéité (18) de forme essentiellement annulaire, et
- un élément de glissement (13) muni d'un filetage extérieur (13) en prise avec le filetage intérieur (14) de l'élément de poussée (9),
* l'élément de poussée (9) agissant par la rotation par rapport au manchon (2) sur l'élément de serrage (15, 16) et l'élément d'étanchéité (18) appliquant l'élément de serrage (15, 16) et l'élément d'étanchéité (18) contre un câble ou un tuyau engagé dans le raccord lissé (1),
* l'élément de poussée (9) étant relié dans la direction de l'axe longitudinal (13) du manchon (2), en étant relié avec le manchon (2) selon une relation fixe par rapport au manchon (2), qui ne peut être modifiée par une rotation par rapport au manchon (2),
* l'élément de glissement (12) étant solidaire en rotation du manchon (2) par rapport à l'axe longitudinal (13) mais coulissant par rapport au manchon (2) dans la direction de l'axe longitudinal (13) le coulissement de l'élément de glissement (12) le long de l'axe longitudinal (13) en direction de l'élément de serrage (15, 16), produisant un mouvement de déplacement de l'élément de serrage (15, 16) radialement vers l'intérieur,
raccord **caractérisé en ce que**
l'élément de glissement (12) est réalisé de façon séparée de l'élément de serrage (15, 16), et
une surface (17) de l'élément de glissement (12) dirigée vers l'élément de serrage (15, 16), est réalisée par une surface de glissement inclinée, de forme conique.

2. Raccord vissé (1) selon la revendication 1
**caractérisé en ce que**
l'élément de serrage (15, 16) et l'élément d'étanchéité (18) sont installés entre l'élément de glissement (12) et une surface d'appui (19) de l'élément de poussée (9).

3. Raccord vissé (1) selon la revendication 2,
**caractérisé en ce que**
la surface d'appui (19) est réalisée sous la forme d'une surface de glissement, inclinée,
* un coulissement de l'élément de glissement (12) par rapport au manchon (2) le long de l'axe longitudinal (13) dans la direction de l'élément de serrage (15, 16) et de l'élément d'étanchéité (18), repoussant au moins en partie vers l'intérieur l'élément de serrage (15, 16) et l'élément d'étanchéité (18).

4. Raccord vissé (1) selon l'une des revendications 1 à 3,
**caractérisé en ce que**
l'élément de poussée (9) est réalisé comme écrou-chapeau avec une surface extérieure lisse, sans rainure et sans cavité.

5. Raccord vissé (1) selon l'une des revendications 1 à 4,
**caractérisé en ce que**
l'élément de poussée (9) est réalisé comme écrou-chapeau dont la surface extérieure couvre l'ensemble du manchon (2) jusqu'à la paroi (7) du boîtier.

6. Raccord vissé (1) selon la revendication 5,
**caractérisé en ce qu'**
un joint d'étanchéité (21, 22) est installé entre la paroi de boîtier (7) et la face frontale de l'écrou-chapeau (9) dirigé vers la paroi de boîtier (7).

7. Raccord vissé (1) selon la revendication 6,
**caractérisé en ce que**
le joint d'étanchéité (22) a une section de forme rectangulaire et la surface extérieure du joint d'étanchéité (22) rejoint à niveau la surface extérieure de l'élément de poussée (9).

8. Raccord vissé (1) selon l'une des revendications 4 à 7,
**caractérisé en ce que**
la surface extérieure de l'écrou-chapeau (9) et/ou la surface extérieure du joint d'étanchéité (22) sont munies d'un nanorevêtement
